# EUROPEAN PATENT APPLICATION

(11) **EP 1 605 300 A1**
(43) Date of publication of application: **14.12.2005**
(21) Application number: 05012446.0
(22) Date of filing: 09.06.2005
(51) Int. Cl.: G02F 1/139, G02F 1/1335, G02F 1/1337

(54) **Field-sequential-OCB-mode transflective liquid crystal display device**

(30) Priority: 10.06.2004 JP 2004172470
(71) Applicant: ALPS ELECTRIC CO., LTD., Tokyo 145-8501 (JP)
(72) Inventor: Oizumi, Mitsuo, Ota-ku Tokyo 145-8501 (JP); Kano, Mitsuru, Ota-ku Tokyo 145-8501 (JP)
(74) Representative: Klunker . Schmitt-Nilson . Hirsch

(57) **Abstract**

An alignment film for causing liquid crystal molecules to be inclined at a pre-tilt angle smaller than 5° is formed on one substrate, and a vertical-alignment-type alignment film is formed in a reflective display portion 35 of the other substrate. An alignment film for causing the liquid crystal molecules to be inclined at a pre-tilt angle smaller than 5° is provided in a transmissive display portion, and the pre-tilt direction of the alignment film on the one substrate corresponding to the transmissive display portion is reverse to the pre-tilt direction of the alignment film on the other substrate corresponding to the transmissive display portion.

## Description

### BACKGROUND OF THE INVENTION

### 1. Field of the Invention

The present invention relates to a transflective liquid crystal display device capable of performing both reflective display using external light reflection and transmissive display using a backlight, and more particularly, to a technique capable of obtaining an OCB-mode desired alignment film in a dual-gap-type transflective liquid crystal display device in which the thicknesses of a liquid crystal layer are different from each other in a reflective display portion and a transmissive display portion.

### 2. Description of the Related Art

In the field of liquid crystal display device, a reduction in power consumption has been strongly demanded, and there has been a demand for an improvement in brightness of display by increasing a pixel region as much as possible. Therefore, in order to fulfill the demands, a structure in which a thick insulating film is formed on the entire surface of an active matrix substrate and reflective pixel electrodes are formed on the insulating film has come into widespread use. In the structure in which the pixel electrodes are formed on the insulating film, scanning lines and signal lines formed below the insulating film are formed to be isolated from the pixel electrodes formed on the insulating film. Therefore, it is possible to form the pixel electrodes in a large area to overlap these wiring lines. Then, it is possible to use the entire region in which switching elements, such as thin film transistors (hereinafter, referred to as TFTs), the scanning lines, and the signal lines are formed as a display region contributing to display, and to raise an aperture ratio, thereby performing brighter display.

Further, since a liquid crystal display mode using reflective pixel electrodes cannot be used in a dark place, a transflective liquid crystal display device in which a backlight is provided to a liquid crystal display device to partially perform transmissive display using a reflective liquid crystal display device has come into widespread use (see Japanese Unexamined Patent Application Publication No. 2000-171794 and Japanese Patent No. 3235102).

The transflective liquid crystal display device has a dual gap structure in which a reflective display region and a transmissive display region are provided in one pixel, and a cell gap of the reflective display region is half a cell gap of the transmissive display region. In general, in the reflective display region, light incident from the outside passes through a liquid crystal layer two times and then reaches an observer side, and in the transmissive display region, light passes through one time and then reach the observer side. However, when the thicknesses of the liquid crystal layers are equal to each other in both regions, optical conditions are different from each other in the transmissive display region and the reflective display region. Thus, the dual gap structure is used to prevent a variation in brightness or color due to the different between the optical conditions.

However, when the structure in which the reflective display region and the transmissive display region are provided in one pixel and the dual gap structure are adopted, it is necessary to arrange liquid crystal molecules in the reflective display region and the transmissive display region in one pixel in an optimum alignment state. However, in the dual gap structure, the thicknesses of the liquid crystal layers for each pixel are different from each other, so that a step difference occurs between the reflective display region and the transmissive display region. Therefore, optimum alignment characteristics must be given to alignment films of each region having the step difference.

Further, in recent years, in order to achieve a liquid crystal display deice having a wide viewing angle and high-speed response, a display method, called an OCB (optical compensated birefringence) mode, has been developed. In a liquid crystal display device using this OCB mode, alignment films respectively formed on upper and lower substrates have the same pre-tilt direction, and thus it is necessary to arrange liquid crystal molecules in a bend alignment. In addition, a compensation film is provided on a liquid crystal cell to be arranged in the bend alignment state.

When the OCB-mode liquid crystal display device is applied to the transflective liquid crystal display device having the dual gap structure, it is necessary to respectively provide alignment films having different pre-tilt directions in the transmissive display region and the reflective display region having the step different in each minute pixel, which makes it difficult for the alignment films to have the optimum alignment state.

For example, in order to form the alignment films having different pre-tilt directions, a complicated, accurate manufacturing process is needed in which, after an alignment film is formed on all pixel regions to have a predetermined alignment state, the alignment film corresponding to the regions of each pixel that makes the alignment states different from each other is removed, and then another alignment film is formed on each pixel region. In this case, one pixel is divided by a plurality of minute regions, and alignment films having different pre-tilt directions are formed on the minute regions, which causes a complicated manufacturing process and difficulty in mass production

### SUMMARY OF THE INVENTION

The present invention is designed to solve the above-mentioned problems, and it is an object of the invention to provide a field-sequential-OCB-mode transflective liquid crystal display device that has a dual gap structure including reflective display regions and transmissive display regions and that can realize an OCB mode and a filed-sequential mode with a simple structure.

In order to achieve the above object, according to an aspect of the invention, there is provided a field-sequential-OCB-mode transflective liquid crystal display device including: an OCB-mode liquid crystal panel having two substrates opposite to each other and a liquid crystal layer interposed therebetween; and electrodes and alignment films that are respectively formed on a surface of one substrate facing the liquid crystal layer and a surface of the other substrate facing the liquid crystal layer. In this structure, some of the electrodes formed on the other substrate serve as reflective pixel electrodes. A transparent portion is formed in a portion of each pixel electrode, and a transparent electrode is formed in the region in which the transparent portion is formed to serve as a transmissive display portion. The region in which the reflective pixel electrode is formed serves as a reflective display portion. An insulating film having a thickness larger than that of an insulating film of the transmissive display portion is provided below the reflective pixel electrode. The thickness of the liquid crystal layer in the reflective display portion is larger than that of the liquid crystal layer in the transmissive display portion, thereby forming a multi-gap structure. The alignment film formed on the one substrate causes liquid crystal molecules to be inclined at a pre-tilt angle smaller than 10°. The alignment film in the reflective display portion of the other substrate is of a vertical alignment type in which the liquid crystal molecules are inclined substantially at a right pre-tilt angle. The alignment film in the transmissive display portion of the other substrate causes the liquid crystal molecules to be inclined at a pre-tilt angle smaller than 10°. A pre-tilt direction of the alignment film formed on the one substrate corresponding to the transmissive display portion is equal to a pre-tilt direction of the alignment film formed on the other substrate corresponding to the reflective display portion.

Further, it is preferable that the alignment film on the one substrate that causes the liquid crystal molecules to be inclined at the pre-tilt angle smaller than 10° and the alignment film formed in the transmissive display region on the other substrate that causes the liquid crystal molecules to be inclined at the pre-tilt angle smaller than 10° align the liquid crystal molecules in a direction satisfying a bend alignment when a voltage is applied to the liquid crystal between the alignment films.

Furthermore, it is preferable that a polymer film constituting the alignment film that causes the liquid crystal molecules to be inclined at the pre-tile angle smaller than 10° have minute transfer uneven portions that are repeatedly provided in a first direction and minute transfer uneven portions that are repeatedly provided in a second direction perpendicular to the first direction, and that each of concave portions of the minute uneven portions repeatedly provided in the second direction be asymmetric in sectional view.

Moreover, it is preferable that the vertical-alignment-type alignment film of the reflective display portion be composed of at least a polymer film having shape anisotropy thereon.

Further, preferably, by alignment regulating force generated by the alignment film in the reflective display portion of the one substrate that causes the liquid crystal molecules to be inclined at the pre-tilt angle smaller than 10° and the vertical-alignment-type alignment film in the reflective display portion of the other substrate, the liquid crystal molecules existing therebetween are aligned similar to the bend alignment state of some liquid crystal molecules between the one substrate and the center of the liquid crystal layer, among the liquid crystal molecules arranged in a bend alignment in the transflective display portion when a voltage is applied.

### BRIEF DESCRIPTION OF THE DRAWINGS

FIG. 1 is a cross-sectional view illustrating the main parts of a liquid crystal display device of the invention;
FIG. 2 is a perspective view illustrating the liquid crystal panel having a backlight and a front light;
FIG. 3 is a view illustrating the structure of the liquid crystal display device of the invention having the backlight and the liquid crystal panel;
FIG. 4 is a plan view schematically illustrating an example of the alignment structure of a transparent electrode and a thin film transistor portion of the liquid crystal display device:
FIG. 5 is a plan view illustrating a pixel electrode portion of the liquid crystal display device;
FIG. 6 is a perspective view illustrating the shape of a reflective surface provided in the pixel electrode portion of the liquid crystal display device;
FIG. 7 is a perspective view illustrating an alignment film provided in the liquid crystal display device shown in FIG. 1;
FIG. 8 is a cross-sectional view illustrating unevenness arranged in a second direction on the alignment film shown in FIG. 7;
FIG. 9 is an explanatory view illustrating the alignment state of liquid crystal molecules in a transmissive display portion and a reflective display portion of the liquid crystal display device shown in FIG. 1 when no voltage is applied; and
FIG. 10 is an explanatory view illustrating the alignment state of the liquid crystal molecules in the transmissive display portion and the reflective display portion of the liquid crystal display device shown in FIG. 1 when a voltage is applied.

### DESCRIPTION OF THE PREFERRED EMBODIMENT

Hereinafter, a first embodiment of a liquid crystal display device of the invention will be described with reference to the accompanying drawings.

In all drawings, a scale of each component is adjusted in order to have a recognizable size.

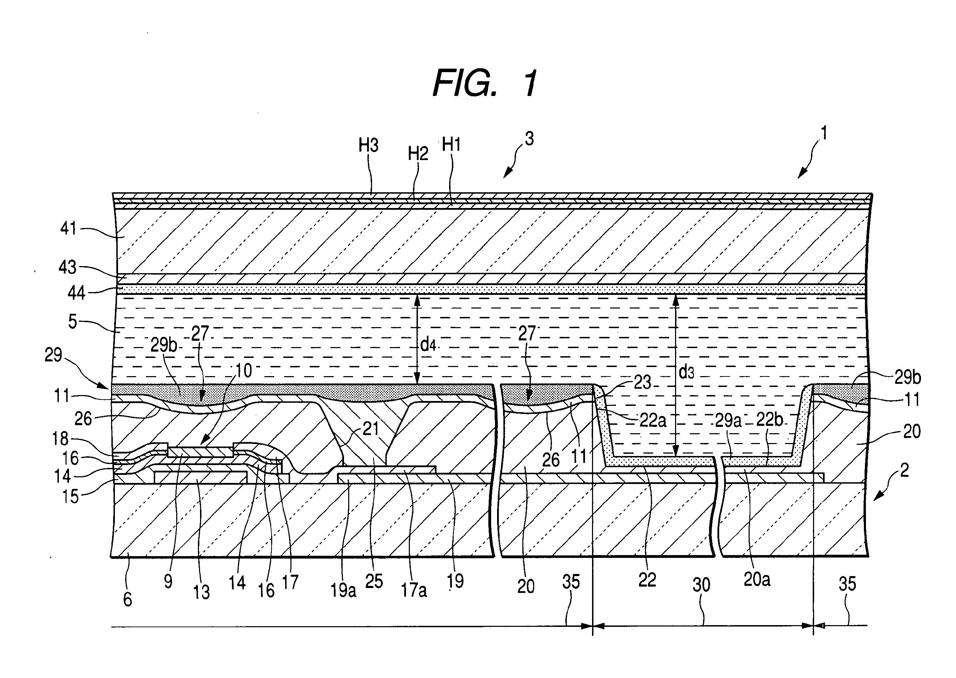

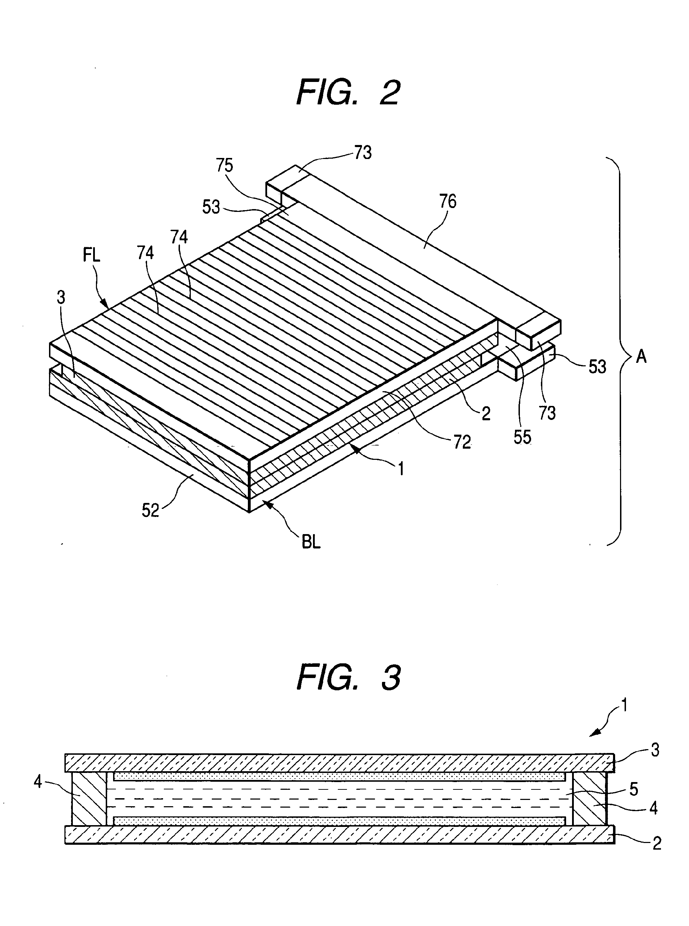

FIGS. 1 to 8 show a transflective liquid crystal display device according to the first embodiment of the invention. As shown in FIG. 2, a transflective liquid crystal display device A includes a liquid crystal panel 1 of an OCB mode, which is a main body, a backlight BL provided on the rear side of the liquid crystal panel 1, and a front light FL provided on the front side of the liquid crystal panel 1. In addition, the backlight BL can time-divisionally emit the three primary color light components, that is, R (red), G (green), and B (blue) light components, and the light components time-divisionally emitted from the backlight BL pass through the liquid crystal panel 1 to be viewed by a user. Further, similarly, the front light FL can time-divisionally emit the three primary color light components, that is, R (red), G (green), and B (blue) light components. The light components time-divisionally emitted from the front light FL are incident on the liquid crystal panel 1, and are then reflected therefrom to the user side, so that the user can view the reflected light.

### Structure of liquid crystal panel

As shown in FIG. 3, the liquid crystal panel 1 includes an active matrix substrate (a lower substrate: one substrate) 2 having switching elements thereon, a counter substrate (an upper substrate: the other substrate) 3 provided opposite thereto, and a liquid crystal layer 5 provided between the substrates 2 and 3 to be surrounded by the substrates 2 and 3 and a sealing material 4. That is, the substrates 2 and 3 having the above-mentioned structure are separated from each other at a predetermined gap by spacers (not shown) interposed therebetween, and are bonded to each other by the thermosetting sealing material 4 that is applied in a frame shape in the periphery of the substrates, as shown in FIG. 2.

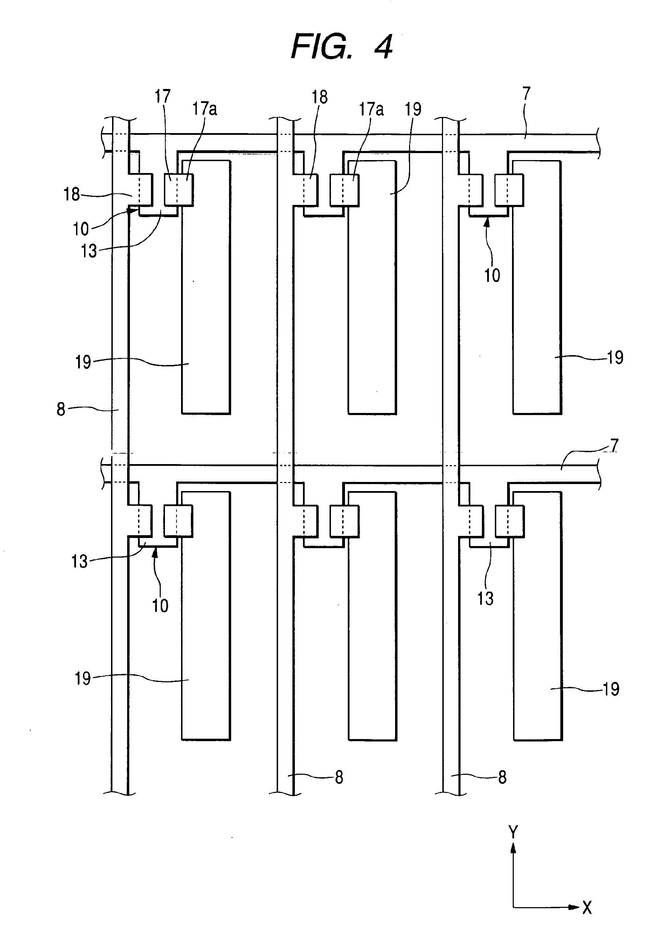

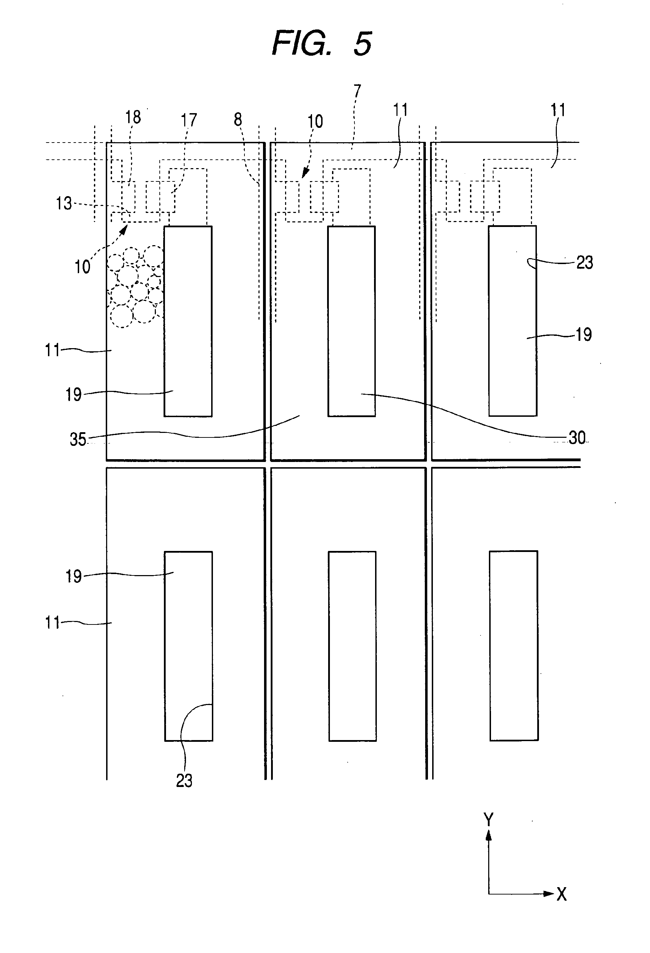

As shown in FIGS. 1, 4, and 5, the active matrix substrate 2 is formed by respectively forming a plurality of scanning lines 7 and a plurality of signal lines 8 in the row direction (the x direction of FIGS. 4 and 5) and the column direction (the y direction of FIGS. 4 and 5) on a base substrate 6 made of a transparent material, such as glass or plastic, such that they are electrically isolated from each other, and TFTs (switching elements) 10 are formed at intersections of the scanning lines 7 and the signal lines 8.

On the base substrate 6, a region in which pixel electrodes 11 are formed, a region in which the TFTs 10 are formed, and a region in which the scanning lines 7 and the signal lines 8 are formed can be referred to as a pixel region, an element region, and a wiring line region, respectively.

The TFTs 10 of this embodiment have a reversed star-shaped structure, and a gate electrode 13, a gate insulating film 15, an i-type semiconductor layer 14, a source electrode 17, and a drain electrode 18 are formed in this order on a lowermost layer of the base substrate 6, which is a main body. In addition, an etching stopper layer 9 is formed between the source electrode 17 and the drain electrode 18 on the i-type semiconductor layer 14.

That is, the gate electrode 13 constitutes a portion of the extending scanning line 7, and the semiconductor layer 14 having an island shape is formed on the gate insulating film 15 covering the gate electrode 13 so as to be placed across the gate electrode 13 in plan view. The source electrode 17 is formed on the i-type semiconductor layer 14 with an n-type semiconductor layer 16 interposed therebetween at one of both sides of the i-type semiconductor layer 14, and the drain electrode 18 is formed on the i-type semiconductor layer 14 with the n-type semiconductor layer 16 interposed therebetween at the other of both sides of the i-type semiconductor layer 14.

Further, transparent electrodes 19 made of a transparent material, such as ITO, are directly formed on the base substrate 6 at the centers of rectangular regions surrounded by the scanning lines 7 and the signal lines 8, respectively. Therefore, these transparent electrodes 19 are formed on the same surface as the gate electrode 13. The transparent electrode 19 is directly connected to a connecting portion 17a, which is an end of the source electrode 17 that is formed to cover one end of the transparent electrode 19, and is formed in a rectangular shape in plan view. As shown in FIG. 4, the transparent electrode 19 is formed in a rectangular shape whose length is slightly smaller than that of the rectangular region surrounded by the scanning line 7 and the signal line 8 and whose width is one-tenth to one half of the width of the rectangular region.

The base substrate 6 is made of an insulating transparent material, such as a synthetic resin, other than glass. The gate electrode 13 is made of a conductive metallic material, and is integrally formed with the scanning line 7 that is provided in the row direction, as shown in FIG. 4. The gate insulating film 15 is composed of an insulating film made of a silicon-based material, such as silicon oxide (SiOₓ) or silicon nitride (SiN_{y}), and is formed on the substrate so as to cover the scanning line 7 and the gate electrode 13, but so as not to cover the transparent electrode 19. Here, since the gate insulating film 15 must be formed in portions other than a connecting portion between the transparent electrode 19 and the source electrode 17 at least, the gate insulating film 15 is not formed on the transparent electrode 19 in this embodiment, but the gate insulating layer 15 can be formed on portions of the transparent electrode 19 other than the connecting portion between the source electrode 17 and the transparent electrode 19.

The semiconductor layer 14 is made of, for example, amorphous silicon (a-Si), and has a channel region opposite to the gate electrode 13 with the gate insulating film 15 interposed therebetween. The source electrode 17 and the drain electrode 18 are made of a conductive material, and are formed facing each other with the channel region disposed therebetween on the semiconductor layer 14. In addition, the drain electrode 18 is an extending portion of the signal line 8 provided in the column direction.

Furthermore, in order to good ohmic contact between the i-type semiconductor layer 14 and the source and drain electrodes 17 and 18, the n-type semiconductor layer (ohmic contact layer) 16 having a V-group element, such as phosphorous (P), doped therein at high concentration is provided between the semiconductor layer 14 and the electrodes 17 and 18.

Further, an insulating film 20 made of an organic material is formed on the base substrate 6, and a pixel electrode having an optical diffuse reflection property (a reflective pixel electrode) 11 made of a metallic material having high reflectance, such as Al or Ag, is formed on the insulating film 20.

Each pixel electrode 11 is formed on the insulating film 20 in a rectangular shape in plan view having a size slightly smaller than that of the rectangular region surrounded by the scanning line 7 and the signal line 8. As shown in FIG. 5, the pixel electrodes 11 are arranged in a matrix in which they are provided adjacent to each other at predetermined gaps in the vertical and horizontal directions in plan view so as not to be shorted. That is, each of the pixel electrodes 11 is arranged such that the edge thereof is provided around the scanning line 7 and the signal line 8 located below the pixel electrode 11, so that the substantially entire region partitioned by the scanning line 7 and the signal line 8 serves as a pixel region. In addition, this pixel region corresponds to a display region of the liquid crystal panel 1.

The insulating film 20 is made of an organic material, such as acryl-based resin, polyimide-based resin, or benzocyclobutene polymer (BCB), to improve a function of protecting the TFTs 10. The insulating film 20 is formed on the base substrate 6 with a relatively large thickness to reliably isolate the TFT 10 from the pixel electrode 11 and various wiring lines. In this way, it is possible to prevent the generation of large parasitic capacitance between the insulating film 20 and the pixel electrode 11, and to remove the step difference between the TFTs 10 and various wiring lines on the base substrate 6 by the thick insulating film 20.

Next, contact holes 21 are formed in the insulating film 20 so as to reach the end portions 17a of the respective source electrodes 17, and recessed portions 22 are also formed therein to be located above the respective transparent electrodes 19. A planar transparent portion (transparent groove) 23 is formed in a portion of the pixel electrode 11 corresponding to the position of the recessed portion 22 so as to coincide with an opening portion 22a. The recessed portions 22 are formed by removing the insulating film 20 in the depth direction thereof, with a portion thereof remaining at the bottom as a coating layer 20a, and the recessed portion 22 is formed in a rectangular shape in plan view that corresponds to the plan-view shape of the transparent electrode 19 and that has a size slightly smaller than that of the transparent electrode 19.

In each pixel region, a portion where the concave portion is formed serves as a transmissive display portion 30 for transmitting light incident from the substrate 2 (light emitted from the backlight BL), and a non-transmissive portion (a portion in which the transparent portion 23 is not formed) of the pixel electrode 11 serves as a reflective display portion 35 for reflecting light incident from the substrate 3.

Further, one of the pixel electrodes 11 substantially corresponds to one pixel region, and the area of the transparent portion 23 corresponds to a transmissive display region at the time of transmissive display. Therefore, it is preferable that the ratio of the area of the transparent portion 23 to the area of the pixel electrode 11 be in the range of 20 to 50%. In addition, in this embodiment, one transparent portion 23 is provided in the pixel electrode 11, but a plurality of transparent portions may be provided in the pixel electrode 11. In this case, it is preferable that the total area of the plurality of transparent portions be 20 to 50 percent of the area of the pixel electrode 11. Of course, in this case, concave portions are provided below the respective transparent portions so as to coincide with the forming position of the plurality of transparent portions.

A conductive portion 25 made of a conductive material is formed in each contact hole 21, the pixel electrode 11 is electrically connected to the source electrode 17 provided underneath the insulating film 20 by the conductive portion 25. Therefore, the source electrode 17 is electrically connected to both the pixel electrode 11 and the transparent electrode 19.

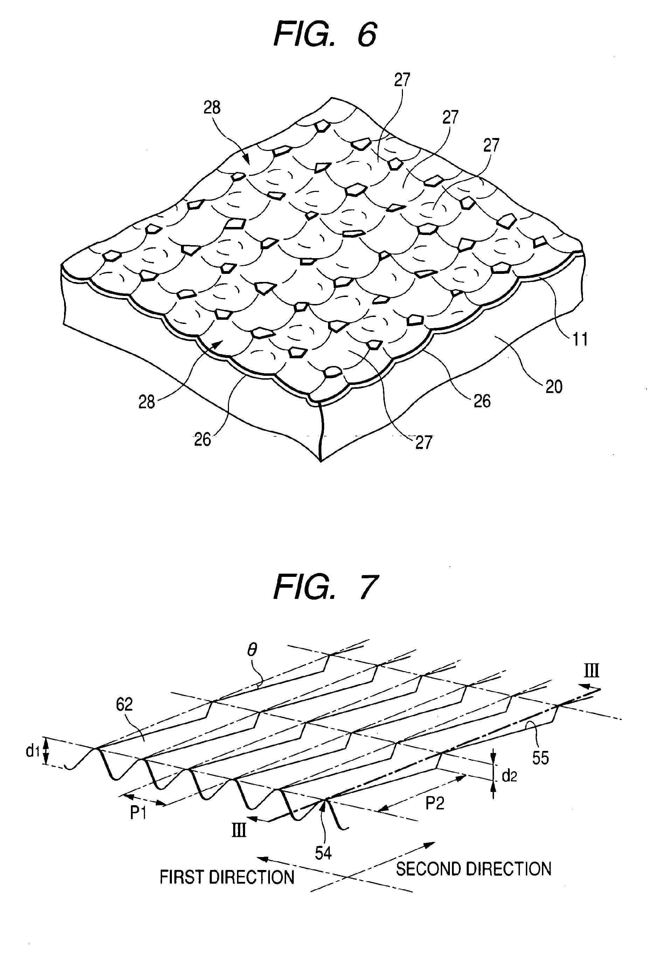

Further, a plurality of concave portions 27 are formed on the surface of the insulating film 20 at positions corresponding to the pixel regions by pressing a transfer mold against the surface of the insulating film 20. As shown in FIG. 6, portions 28 having concave shapes are formed in the pixel electrodes 11, and some of light components incident on the liquid crystal panel are scattered by the plurality of concave portions 27 formed in the pixel electrodes 11. Therefore, the plurality of concave portions 27 formed on the surface of the insulating film 20 have diffuse reflection functions capable of performing brighter display in the wider viewing angle range. In addition, as shown in FIG. 6, the concave portions 27 are arranged to be closely adjacent to each other in the horizontal direction arranged such that portions of the inner surfaces thereof on the sides of the opening portions are consecutively adjacent to each other.

In this embodiment, the inner surfaces of the concave portions 27 have hemispherical shapes, and the brightness distribution of the diffuse reflection light of light incident on the pixel electrode 11 at a predetermined angle (for example, 30°) is substantially asymmetric in the wide range, centered on acceptance angel of 0 to 5°. In addition, the diameter of the concave portion 27 is set in the range of 5 to 100 µm for the convenience of manufacture. Further, the concave portion 27 is formed with a depth of 0.1 to 3 µm.

Furthermore, in the plan view of the pixel electrode 11 shown in FIG. 5, the concave portions 27 in the pixel electrodes 11 are not shown for the sake of simplicity of illustration. However, the pixel electrode 11 has a length of about 100 to 200 µm and a width of about 30 to 90 µm in the general liquid crystal panel. Therefore, the relative size of the concave portion 27 with respect to the pixel electrode 11 is represented by a solid line on one pixel in FIG. 4.

A lower-substrate-side alignment film 29 made of, for example, polyimide, is formed on the base substrate 6 having the above-mentioned structure so as to cover the pixel electrodes 11, the insulating layer 20, the recessed portions 22, and the concave portions 27. In addition, different alignment treatments are performed on a portion of the lower-substrate-side alignment film 29 that is formed on the transmissive display portion 30 and the other portion thereof formed on the reflective display portion 35, respectively, so that the alignment film 29 is composed of an alignment film 29a for the transmissive portion that is formed on a surface of the transmissive display portion 35 facing the liquid crystal layer and an alignment film 29b for the reflective portion that is formed on a surface of the reflective display portion 35 facing the liquid crystal layer. The alignment film 29a for the transmissive display portion 30 is made of the same material as an alignment film 44 to be formed on the counter substrate 3, which will be described later.

On the counter substrate 3 shown in FIG. 1 and 3, a counter electrode (common electrode) 43 made of a transparent material, such as ITO, and the upper-substrate-side alignment film 44 are sequentially formed on a surface of a main substrate 41 made of a transmissive material, such as glass or plastic, which faces the liquid crystal layer 5. The upper-substrate-side alignment film 44 has uneven portions thereon as shown in FIG. 6.

The alignment film (the alignment film formed on one substrate) 44 is an alignment film composed of a polymer film having shape anisotropy on a surface thereof, similar to the alignment film 29 formed on the substrate 6, and has a pre-tile angle of 0 to 10°, preferably a pre-tilt angle of 2 to 8°.

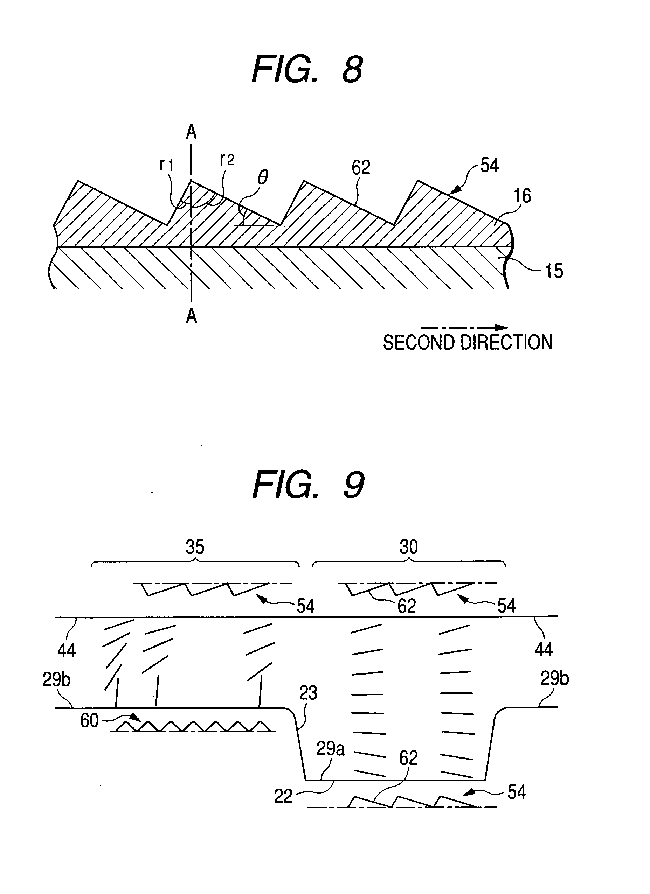

A technique for alignment control by the alignment films 29a and 44 is disclosed in SID93 DIGEST, page 957, 1993, compiled by the present inventors. However, as shown in FIGS. 7 and 8, in the plan view of the alignment films 29a and 44, minute unevenness is formed in a first direction, and minute unevenness is also formed in a second direction orthogonal to the first direction. FIG. 8 is a cross-sectional view taken along the line III-III of FIG. 7, and shows the cross-section of convex portions 54 arranged in the second direction.

Further, a pitch P1 between concave portions or convex portions arranged in the first direction is smaller than a pitch P2 between concave portions or the convex portions arranged in the second direction. The pitch P1 is smaller than 3.0 µm, preferably in the range of 0.05 to 0.5 µm, and the pitch P2 is smaller than 50 µm, preferably in the range of 0.5 to 5 µm.

When the pitch P1 is set smaller than the pitch P2 as described above, it is possible to easily control the pre-tilt angle.

Furthermore, a depth d1 of the concave portion in the first direction (or the height of the convex portion in the first direction) is smaller than 0.5 µm, preferably in the range of 0.01 to 0.2 µm, and a depth d2 of the concave portion in the second direction (or the height of the convex portion in the second direction) is smaller than 0.5 µm, preferably in the range of 0.01 to 0.2 µm.

In order to prevent the generation of a domain and to obtain desired alignment force, an inclination angle θ of a gentle slope 62 of the minute unevenness arranged in the second direction with respect to the substrate 10 is preferably larger than 0° and is smaller than 3°. When the inclination angle θ is 0°, the generation of the domain becomes remarkable. When the inclination angle θ is larger than 3°, the alignment force is gradually lowered.

As shown in FIG. 7, the convex portions of the minute concave and convex portions arranged in the second direction are formed substantially in triangular shapes whose two sides are asymmetric. That is, the convex portion is formed such that the ratio r2/r1 of two right and left angles r1 and r2 obtained by dividing a vertical angle of the triangle by a vertical line A that is vertically drawn from the vertical angle of the triangle is not equal to 1. The traverse section of a convex portion 54 may have various shapes, such as a shape similar to a sin wave, an arch shape, and a triangular shape. Among these shapes, the triangular shape is most preferable to improve the alignment of liquid crystal. In this case, a vertex of the triangle may be formed in a circular shape or a truncated shape. When the convex portion 54 is formed in a triangular shape in cross-sectional view, it is preferable that the ratio r2/r1 of two right and left angles r1 and r2 obtained by dividing a vertical angle of the triangle by the vertical line A that is vertically drawn from the vertical angle of the triangle be larger than 1.2, as shown in FIG. 7. When the angular ratio is set in this range, it is possible to set the pre-tile angle to be approximately zero.

The alignment films 29a and 44 have a thickness of about 50 to 200 nm.

The alignment films 29a and 44 are made of a polymer material, such as a material capable of giving shear distortion by weak shearing force before hardening or a material capable of being plastically deformed (of plastically flowing) by stress. For example, the material is properly selected from a polyimide-based resin, a polyamide-based resin, a polyvinyl alcohol-based resin, an epoxy-based resin, a denatured epoxy-based resin, a polystyrene-based resin, a polyurethane-based resin, a polyolefin-based resin, and an acryl-based resin.

The alignment films 29a and 44 can be formed by the following method: for example, a transfer mold having a minute uneven pattern (a minute uneven pattern for forming minute uneven portions along the first direction and minute uneven portions along the second direction) to be transferred on a surface thereof is pressed against a layer made of the polymer material which is formed on one substrate with a reflector and an electrode layer interposed therebetween, thereby transferring the minute uneven pattern on the layer.

The transfer mold is manufactured by the following method. First, a grating mold is manufactured by holographic interference using a double coherent laser beam. The same minute uneven pattern as that on the alignment film 44 is formed on the surface of the grating mold.

Then, when the grating mold is pressed against a silicon rubber layer, an uneven pattern reverse to the uneven pattern of the grating mold is formed on the surface of the silicon rubber layer. Then, the grating mold is separated therefrom to obtain a transfer mold composed of the silicon rubber layer.

Further, the alignment film 29b of the reflective display portion 35 is composed of an alignment film capable of exhibiting a vertical alignment mode. The alignment film 29b is formed by a transfer method, similar to the alignment films 29a and 44. That is, convex portions 60 are formed on the alignment film 29b in regular triangles or triangles similar thereto at predetermined pitches, and thus the alignment film 29b having the convex portions 60 thereon can exhibit a vertical alignment mode in which liquid crystal molecules close to the convex portions are aligned in the angular range of 85 to 90°.

The convex portions 60 of the alignment film 29b can be manufactured in the same transfer method as that in which the alignment films 29a and 44 are manufactured. The convex portions 60 can be formed with a height of several tens to 100 nm and a width of several tens to 100 nm.

FIG. 9 shows the inclined directions of the convex portions 54 respectively formed on the alignment films 29a and 44 and the alignment state of liquid crystal molecules. In addition, FIG. 9 shows the directions of the convex portions 54 respectively formed on the alignment films 29a and 44 comparatively. As shown in FIG. 9, in the lower-substrate-side alignment film 29a, the gentle slope 62 is inclined in the lower left direction. In the upper-substrate-side alignment film 44, the gentle slope 62 is inclined in the upper right direction. This structure enables the liquid crystal molecules to be arranged in a spray alignment state when no voltage is applied, as shown in FIG. 9. That is, the liquid crystal molecules existing between the alignment films 29a and 44 in the transmissive display portion 30 are inclined at a pre-tilt angle of about 2 to 8° in the lower right direction at positions closer to the alignment film 29a, and are inclined at a pre-tilt angle of about 2 to 8° in the upper right direction at positions closer to the alignment film 44.

On the contrary, the alignment film 44 in the reflective display portion 35 is similar to the alignment film 44 in the transmissive display portion 30, but the alignment film 29b in the reflective display portion 35 is a vertical alignment film. Therefore, as shown in FIG. 9, the liquid crystal molecules are vertically inclined at a pre-tilt angle of about 2 to 8° in the upper right direction at positions closer to the alignment film 44, and are inclined at a pre-tilt angle of about 85 to 90° in the upper right direction at positions closer to the alignment film 29b.

Further, in FIG. 2, for the sake of simplicity of illustration, various layers and wiring lines formed on a surface of the substrate 2 facing the liquid crystal layer and various layers formed on a surface of the substrate 3 facing the liquid crystal layer are not shown, but only the positional relationship between the alignment films 29 and 44 is shown. Therefore, as shown in FIG. 1, a polarizing plate H1 and retardation plates H2 and H3 can be provided on the outer surface of the main substrate 41, if necessary.

In the transflective liquid crystal display device A of this embodiment, as described above, the recessed portion 22 is formed in the insulting film 20 located below the transparent portion 23 that is formed in the concave pixel electrode 11, and liquid crystal is also injected into the recessed portion 22. Therefore, a thickness d₃ of the liquid crystal layer 5 on the transmissive display portion 30 is larger than a thickness d₄ of the liquid crystal layer 5 on the reflective display portion 35. Preferably, the thickness d₃ of the liquid crystal layer 5 on the transmissive display portion 30 is about two times larger than the thickness d₄ of the liquid crystal layer 5 on the reflective display portion 35.

### [Structure of backlight]

As shown in FIG. 2, the backlight BL applied to the transflective liquid crystal display device A of this embodiment is provided on the rear side of the liquid crystal panel 1, and is mainly composed of a flat light guide plate 52 made of a transparent material, such as acrylic resin, a light source 53, and a rod-shaped light guide 55. In the backlight BL, the rod-shaped light guide 55 is provided at one side of the light guide plate 52, and the light source 53 having a light-emitting element capable of emitting the three primary color light components, such as an LED, is arranged at one end or both ends of the rod-shaped light guide 55. That is, the light source 53 has an element (LED) for emitting a red light component, an element (LED) for emitting a green light component, and an element (LED) for emitting a blue light component, and the desired color light components emitted from these light emitting elements can be guided into the light guide plate 52 through the rod-shaped light guide 55. The rod-shaped light guide 55 has prism uneven portions on an inner surface thereof. Therefore, the optical path of light guided into the rod-shaped light guide 55 from the light source 53 that is arranged at an end portion thereof in the lengthwise direction can be changed by the prism uneven portions to be guided into the optical guide plate 52.

The transparent light guide plate 52 guides, to the liquid crystal panel 1, light emitted from the liquid source 53 that is provided on the rear side of the liquid crystal panel 1. The light emitted from the light source 53 shown in FIG. 2 is introduced into the light guide plate 52 through the end surface, and the optical path of the light is changed by the reflective portions, such as prism-shaped uneven portions formed on the rear surface of the liquid guide plate 52. Then, the light is emitted from an emission surface, which is an upper surface of the light guide plate, to the liquid crystal panel 1.

### Structure of front light

The front light FL applied to the transflective liquid crystal display device A of this embodiment includes a light guide plate 72, a light source 73, and a rod-shaped light guide 76, as shown in FIG. 2, and the light guide 73 is provided at an end portion of the light guide 76 for introducing light to the light guide plate 72. In addition, the light guide plate 72 is made of a transparent resin, and a lower surface (a surface facing the liquid crystal panel 1) of the light guide plate 72 is an emission surface from which light is emitted to illuminate the liquid crystal panel 1. The other surface of (an upper surface) the light guide plate 72 opposite to the emission surface serves as a reflective surface (light guide portion) for changing the direction of light traveling therein.

In order to change the traveling direction of light in the liquid guide plate 72 by reflection, wedge-shaped grooves 74 are formed in strip shapes on the reflective surface at predetermined pitches. Each groove 74 is composed of a gentile slope and a steep slope which are inclined with respect to the emission surface, and is formed in a direction parallel to a side end surface of the liquid guide plate 72. In addition, the grooves 74 are formed on the upper surface of the light guide plate 72 at predetermined gaps and with a predetermined width, so that viewing the liquid crystal panel 1 through the liquid crystal plate 72 is not obstructed.

The rod-shaped liquid guide 76 is arranged at the side end surface of the liquid guide plate 72, and the light sources 73 are provided at both ends of the rod-shaped liquid guide 76. Each light source 73 is provided with an element (LED) for emitting a red light component, an element (LED) for emitting a green light component, and an element (LED) for emitting a blue light component, the desired color light components emitted from these light emitting elements can be guided into the light guide plate 72 through the rod-shaped light guide 76, and is then guided to the liquid crystal panel 1.

In the transflective liquid crystal display device A of this embodiment having the above-mentioned structure, liquid crystal molecules are aligned when no voltage is applied, as shown in FIG. 9. That is, the liquid crystal molecules between the alignment films 44 and 29a in the transmissive display portion 30 are aligned in a stripe state, and the liquid crystal molecules between the alignment films 44 and 29b in the reflective display portion 35 are aligned in a hybrid state.

FIG. 9 shows the convex portions 54 formed on the alignment film 44 and the directions of the gentle slopes 62 thereof, and the liquid crystal molecules are inclined at a small pre-tilt angle (2 to 8°) according to the gentle slopes 62 of the convex portions 54. In addition, FIG. 9 also shows the directions of the gentle slopes 62 of the convex portions 54 formed on the alignment film 29a, and the liquid crystal molecules are inclined at a small pre-tilt angle (2 to 8°) according to the gentle slopes 62 of the convex portions 54.

Therefore, as shown in FIG. 9, the liquid crystal molecules over the alignment film 44 are inclined at the same pre-tilt angle as that of the liquid crystal molecules over the alignment film 29a, and thus the liquid crystal molecules are arranged in a spray alignment in the entire transmissive display portion 30.

Further, in FIG. 9, the liquid crystal molecules located closer to the alignment film 29b in the reflective display portion 35 are vertically aligned at an angle of about 85°. However, when the alignment film 29b applies strong alignment regulating force to the liquid crystal molecules, it is possible to regulate the alignment of the liquid crystal molecules at an angle larger than the above-mentioned angle, for example, at an angle of 88 to 90°.

When a voltage is applied to the electrodes in the state shown in FIG. 9, the alignment state of the liquid crystal molecules in the transmissive display portion 30 is changed from the spray alignment state to a bend alignment state. In the bend alignment state, only the liquid crystal molecules arranged closer to the alignment film 44 are aligned substantially at a small pre-tilt angle, and as the liquid crystal molecules becomes more distant from the alignment film 44, electric lines of force closer to the vertical direction are generated according to an electric field, so that the liquid crystal molecules are aligned substantially in the vertical direction. Further, only the liquid crystal molecules arranged closer to the alignment film 29a are aligned at a small pre-tilt angle. In addition, in the reflective display portion 35, only the liquid crystal molecules arranged closest to the alignment film 44 are aligned substantially at a pre-tilt angle of 2 to 8°. However, the other liquid crystal molecules in the reflective display portion 35 and the liquid crystal molecules arranged closer to the alignment film 29b are vertically aligned due to the electric lines of force generated in the vertical direction according to the electric field.

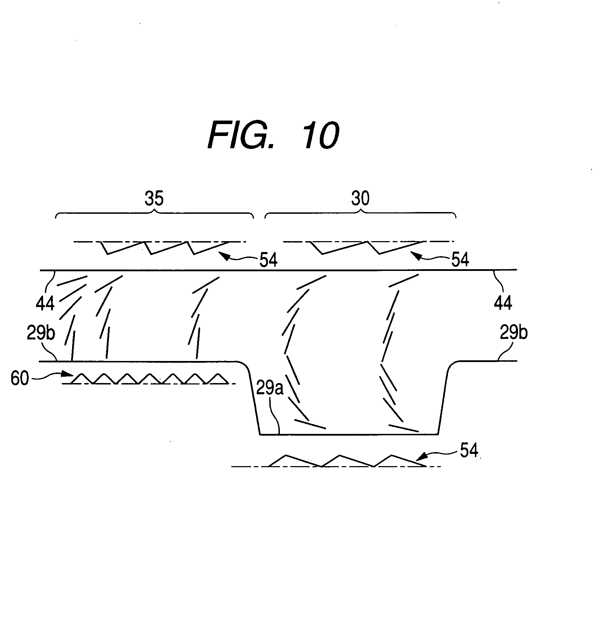

In the alignment state when no voltage is applied, as shown in FIG. 9, the liquid crystal molecules arranged closer to the alignment film 29b have already been in the vertical alignment state. Therefore, in a state in which a voltage is applied, other liquid crystal molecules located at the upper side of them are vertically aligned according to the vertical alignment state of liquid crystal molecules located at the lower side thereof, except for the liquid crystal molecules located closest to the alignment film 44. Thus, as shown in FIG. 10, the alignment state of the liquid crystal molecules in the reflective display portion 35 is easily changed to an alignment state similar to the upper half of the bend alignment state of the liquid crystal molecules in the transmissive display portion 30 that is adjacent to the reflective display portion 35. When the applied electric field is removed, the liquid crystal molecules easily return from the alignment state shown in FIG. 10 to the alignment state shown in FIG. 9. Thus, the transflective liquid crystal display device A of this embodiment can smoothly, reliably perform the switching between the alignment state when no voltage is applied and the alignment state when a voltage is applied.

In the transflective liquid crystal display device A of this embodiment, the switching of liquid crystal display between the alignment state shown in FIG. 9 and the alignment state shown in FIG. 10 is performed. In the liquid crystal panel 1 of an OCB mode that changes the alignment states, it is possible to perform high-speed switching peculiar to the OCB mode. Therefore, it is possible to realize a response time smaller than 10 milliseconds, and thus to cope with a moving picture display capable of performing high-speed rewriting. In addition, it is also possible to obtain the wide viewing angle characteristic peculiar to the OCB mode.

Further, the transflective liquid crystal display device A having the above-mentioned structure can perform the color display of a field sequential method by changing color light components respectively emitted from the three-primary-color light source of the backlight BL or the front light FL, operatively associated with the switching of liquid crystal display.

In a color display method using general color filters, white light emitted from a backlight passes through a liquid crystal layer provided between substrates, and the light transmission is controlled for each pixel. In addition, the light passes through the color filters to be colored, thereby performing color display. In this case, one pixel is divided into three color filter pixels, and color display is divided according to which pixel light passes through. In addition, white display or black display is performed by making white light pass through the entire liquid crystal layer and three pixels or by shielding the light.

On the contrary, in field sequential display used for the transflective liquid crystal display device A of this embodiment, one color filter pixel is provided in one pixel. According to the backlight BL, necessary color light components are alternately emitted from the light source 53 in a time division method. According to the front light FL, necessary color light components are alternately emitted from the light source 73 in a time division method. In this case, light-emission timing is set greater than 180 Hz (smaller than 5.6 milliseconds), and light components are emitted from the respective light source as alternating light components.

In the backlight BL, when a light component emitted from a red light emitting element passes through the liquid crystal layer of each pixel, red display can be performed on each pixel. When a light component emitted from a green light emitting element passes through the liquid crystal layer of each pixel, green display can be performed on each pixel. In addition, when a light component emitted from a blue light emitting element passes through the liquid crystal layer of each pixel, blue display can be performed on each pixel. In addition, when light components emitted from three light emitting elements pass through every pixel, white display can be performed on every pixel. In addition, when the traveling of light components emitted from the light emitting elements to each pixel is shielded, black display can be performed on every pixel. In order to emit a medium color, first, necessary light components are emitted from the light source, and the transmission time of a desired color light component is adjusted by controlling the alignment state of liquid crystal molecules, thereby performing color display with a medium color light component capable of being perceived by the naked eye of a user.

Further, similarly, when the front light FL is used, it is possible to perform color display by switching the transmission state of color light components emitted from three-primary-color light emitting elements (LEDs) provided in the light source 73 in the liquid crystal layer for every pixel.

According to the above-mentioned structure, it is possible to provide a transflective liquid crystal display device A capable of performing color display by driving the OCB-mode liquid crystal panel 1 in a field-sequential manner.

Further, according to the above-mentioned structure, it is possible to perform color display by driving the OCB-mode liquid crystal display panel 1 capable of performing high-speed display in the field-sequential manner in which color filters are not used. In addition, it is possible to select transmissive display using the transmissive display portion 30 or reflective display using the reflective display portion 35.

Therefore, according to the transflective liquid crystal display device A having the above-mentioned structure, it is possible to cope with moving picture display required for high-speed response and to perform color display without using color filters. In addition, it is possible to reduce manufacturing costs with a structure having no color filer, and to perform reflective display and transmissive display, which makes it possible to perform bright color display in a dark place. Further, an uneven pattern transfer method can be used when an alignment film required for realizing the OCB mode for the bend alignment is formed on minute regions of each pixel, and thus it is possible to easily manufacture a transflective liquid crystal display device.

As described above, according to the invention, in a multi-gap structure that has transflective display portions and reflective display regions to perform both transmissive display and reflective display, it is possible to realize a display method of an OCB mode capable of performing high-speed response using a field-sequential-type liquid crystal display device.

Further, since an alignment film having uneven portions thereon can cause liquid crystal molecules to be inclined at a pre-tilt angle smaller than 10°, it is possible to form the uneven portion using a transfer method. In this case, it is possible to easily form the alignment film in a reflective display region and a transmissive display region of each minute pixel.

Furthermore, as the alignment film causing the liquid crystal molecules to be incline at the pre-tilt angle smaller than 10°, an alignment film having anchoring energy in the above-mentioned range can be used. In addition, in the alignment film causing the liquid crystal molecules to be incline at the pre-tilt angle smaller than 10°, asymmetric concave or convex portions in the first and second directions can be used, which enables liquid crystal molecules to be easily arranged in a bend alignment state.

In the reflective display portion, by a combination of the alignment film causing the liquid crystal molecules to be incline at the pre-tilt angle smaller than 10° and the alignment film of a vertical alignment mode, the liquid crystal molecules in the reflective display portion can be aligned similar to the alignment state of some liquid crystal molecules between the one substrate and the center of the liquid crystal layer, among the liquid crystal molecules arranged in the bend alignment in the transflective display portion when a voltage is applied. In this case, when a voltage is applied, the liquid crystal molecules in the reflective display portion are smoothly bend-aligned.

## Claims

1. A field-sequential-OCB-mode transflective liquid crystal display device comprising:
an OCB-mode liquid crystal panel having two substrates opposite to each other and a liquid crystal layer interposed therebetween; and
electrodes and alignment films that are respectively formed on a surface of one substrate facing the liquid crystal layer and a surface of the other substrate facing the liquid crystal layer,
wherein some of the electrodes formed on the other substrate serve as reflective pixel electrodes,
a transparent portion is formed in a portion of each pixel electrode, and a transparent electrode is formed in the region in which the transparent portion is formed to serve as a transmissive display portion,
the region in which the reflective pixel electrode is formed serves as a reflective display portion,
an insulating film having a thickness larger than that of an insulating film of the transmissive display portion is provided below the reflective pixel electrode,
the thickness of the liquid crystal layer in the reflective display portion is larger than that of the liquid crystal layer in the transmissive display portion, thereby forming a multi-gap structure,
the alignment film formed on the one substrate causes liquid crystal molecules to be inclined at a pre-tilt angle smaller than 10°,
the alignment film in the reflective display portion of the other substrate is of a vertical alignment type in which the liquid crystal molecules are inclined substantially at a right pre-tilt angle,
the alignment film in the transmissive display portion of the other substrate causes the liquid crystal molecules to be inclined at a pre-tilt angle smaller than 10°, and
a pre-tilt direction of the alignment film formed on the one substrate corresponding to the transmissive display portion is equal to a pre-tilt direction of the alignment film formed on the other substrate corresponding to the reflective display portion.

2. The field-sequential-OCB-mode transflective liquid crystal display device according to claim 1,
wherein the alignment film on the one substrate that causes the liquid crystal molecules to be inclined at the pre-tilt angle smaller than 10° and the alignment film formed in the transmissive display region on the other substrate that causes the liquid crystal molecules to be inclined at the pre-tilt angle smaller than 10° align the liquid crystal molecules in a direction satisfying a bend alignment when a voltage is applied to the liquid crystal between the alignment films.

3. The field-sequential-OCB-mode transflective liquid crystal display device according to claim 1 or 2,
wherein a polymer film constituting the alignment film that causes the liquid crystal molecules to be inclined at the pre-tile angle smaller than 10° has minute transfer uneven portions that are repeatedly provided in a first direction and minute transfer uneven portions that are repeatedly provided in a second direction perpendicular to the first direction, and
each of concave portions of the minute uneven portions repeatedly provided in the second direction is asymmetric in sectional view.

4. The field-sequential-OCB-mode transflective liquid crystal display device according to any one of claims 1 to 3,
wherein the vertical-alignment-type alignment film of the reflective display portion is composed of at least a polymer film having shape anisotropy thereon.

5. The field-sequential-OCB-mode transflective liquid crystal display device according to any one of claims 1 to 4,
wherein, by alignment regulating force generated by the alignment film in the reflective display portion of the one substrate that causes the liquid crystal molecules to be inclined at the pre-tilt angle smaller than 10° and the vertical-alignment-type alignment film in the reflective display portion of the other substrate, the liquid crystal molecules existing therebetween are aligned similar to the alignment state of some liquid crystal molecules between the one substrate and the center of the liquid crystal layer, among the liquid crystal molecules arranged in a bend alignment in the transflective display portion when a voltage is applied.
